# FASCICULE DE BREVET EUROPEEN

(11) **EP 3 050 956 B1**
(45) Date de publication et mention de la délivrance du brevet: **30.08.2017**
(21) Numéro de dépôt: 16152514.2
(22) Date de dépôt: 25.01.2016
(51) Int. Cl.: C12G 1/02, C12H 1/22

(54) **DISPOSITIF D'AIDE À LA VINIFICATION ET/OU AU STOCKAGE DU VIN, SON UTILISATION ET PROCÉDÉ POUR LA VINIFICATION DE VIN ROUGE**
HILFSVORRICHTUNG ZUR WEINHERSTELLUNG UND/ODER WEINLAGERUNG, IHRE ANWENDUNG UND VERFAHREN ZUR WEINHERSTELLUNG VON ROTWEIN
DEVICE TO ASSIST WITH THE WINEMAKING PROCESS AND/OR THE STORAGE OF WINE, USE THEREOF AND METHOD FOR PRODUCING RED WINE

(30) Priorité: 02.02.2015 FR 1550801
(43) Date de publication de la demande: 03.08.2016
(73) Titulaire: Vatan-Vini, 49400 Saumur (FR)
(72) Inventeur: VATAN, Philippe, 49730 Montsoreau (FR); LELIAS, Yann, 49400 Dampierre sur Loire (FR)
(74) Mandataire: Le Cloirec, Claudine

(56) Documents cités:
- WO-A1-2011/148228
- WO-A2-2013/028144
- WO-A2-2014/115062
- FR-A1- 2 497 521
- FR-A1- 2 587 813
- FR-A1- 2 808 282

## Description

La présente invention concerne le domaine de la vinification et du stockage du vin, plus particulièrement un dispositif d'aide à la vinification et/ou au stockage du vin dans une cuve par régulation du niveau du liquide dans ladite cuve, et un procédé mettant en oeuvre un tel dispositif, notamment pour la vinification de vin rouge.

On connait du document FR 2 587 813 A1 (Delbeck) un dispositif d'ajustement de niveau pour des contenants de liquide notamment pour des barriques ou des cuves à vin. Il permet de maintenir le niveau de liquide constant afin de réduire le contact du vin avec l'air, en palliant les variations de volume dues notamment aux variations de température, aux prélèvements de test ou de dégustation et à l'évaporation. Cet ajustement s'effectue aux moyens d'une poche (outre) extensible, gonflable à partir de l'extérieur de la cuve. Cette poche immergée est connectée à des moyens de gonflage et mise sous pression par un gaz tel que l'air, des moyens de repérage du niveau du liquide étant prévus sous la forme notamment d'un flotteur.

La demande WO2013/028144 (Maiocco) décrit également un dispositif destiné à réduire l'espace de tête dans une barrique de vin en bois afin de limiter les effets de l'oxydation due à l'air à l'interface du fluide. Il permet notamment d'éviter de compléter le niveau du liquide avec du vin extérieur pour palier l'évaporation. Ce dispositif comprend un capteur de niveau de liquide, tel qu'un interrupteur flottant, disposé au-dessus de l'orifice supérieur de remplissage de la barrique et une poche gonflable connectée à une tige verticale pour son gonflage, placée dans la portion supérieure de la barrique et fixée au bouchon de fermeture dudit orifice de remplissage.

Il apparaît que de tels dispositifs de l'art antérieur ne peuvent s'appliquer qu'à des contenants de petit volume. En effet pour des cuves de grande capacité (par exemple de plusieurs dizaines d'hectolitres), il est difficile de pouvoir utiliser des poches de grand volume, la poche subissant une pression importante de la colonne de liquide.

Par ailleurs la poche est le plus souvent montée sur une tige qui est elle-même solidarisée aux moyens d'obturation (bonde) de la cuve. L'augmentation du volume de la poche est à éviter pour ne pas exercer, à l'état gonflé de ladite poche, une poussée trop importante sur ces moyens d'obturation.

Un premier but de l'invention est donc de proposer un dispositif d'aide à la vinification et/ou au stockage du vin par régulation du niveau du liquide au moyen d'une poche gonflable dans des contenants de grande capacité.

Dans ce contexte, un autre but de l'invention est de proposer un dispositif d'aide à la vinification et/ou au stockage du vin par régulation du niveau du liquide au moyen d'une poche gonflable de grand volume.

Par ailleurs, les opérations de vinification concernant plus particulièrement le vin rouge comprennent une étape de macération dans laquelle le jus extrait des grains de raisin (appelé moût) est mis en contact dans une cuve avec la pulpe et la peau du raisin qui forment peu à peu un chapeau compact (appelé marc) flottant sur le jus. Pour favoriser le contact entre le moût et le marc et une meilleure extraction, notamment des anthocyanes, des polyphénols et des tannins, on procède à un pigeage, c'est-à-dire à une opération permettant de faire descendre le chapeau de marc au sein du jus, c'est-à-dire de le noyer en l'immergeant (par exemple au moyen de pilons manoeuvrés manuellement ou par des vérins hydrauliques ou pneumatiques) afin d'augmenter et de renouveler le moût imprégnant et environnant le marc.

D'autres dispositifs comprennent une pompe qui prélève, le jus en fond de cuve, le filtre et le remonte au-dessus du chapeau de marc en l'aspergeant. Ceci implique un temps de main d'oeuvre très important (installation, exécution, surveillance, nettoyage), ainsi que des risques d'échanges de levures de cuve à cuve. De plus, il arrive souvent que le débit fourni par le filtre en bas de cuve ne soit pas suffisant pour effectuer un remontage efficace, le jus emprunte alors des circuits préférentiels au travers du marc et ainsi le marc n'est pas totalement exploité.

Pour réduire la compacité du chapeau, le document FR 2 497 521 (Murat) prévoit une poche gonflable, montée sur une tige centrale en partie supérieure de la cuve de fermentation. Cette poche qui s'étend en travers du marc, est reliée à une source de fluide à l'extérieur de la cuve et, après gonflement/dégonflement, repousse le marc et en modifie le tassement, en agitant le moins possible le moût.

Un tel dispositif n'est pas suffisant pour favoriser l'extraction et la diffusion des tannins et composés colorés du marc vers le moût.

Un autre but de l'invention est donc de pallier les inconvénients des dispositifs ci-dessus et de proposer un dispositif d'aide à la vinification, notamment du vin rouge, au moyen d'une poche gonflable permettant d'améliorer et d'optimiser la macération, sans nécessiter de moyens mécaniques externes de pompage ou de pigeage.

A cet effet la présente invention concerne un dispositif d'aide à la vinification et/ou au stockage du vin dans une cuve par régulation du niveau du liquide dans ladite cuve, comprenant :
a)une cuve, contenant un liquide, tel que du jus de raisin en cours de macération fermentation ou du vin, et susceptible de renfermer un gaz dans l'espace compris entre le niveau du liquide et la paroi interne supérieure de ladite cuve, dénommé espace de tête,
b)des moyens indicateurs du niveau du liquide dans la cuve, de préférence sous la forme d'un flotteur,
c)des moyens d'ajustement du niveau du liquide, sans ajout de liquide supplémentaire, sous la forme d'au moins une poche gonflable immergée dans le liquide à l'intérieur de la cuve,
d)la ou les poches étant couplée(s) à des moyens de gonflage et de dégonflage pilotés par le flotteur,
caractérisé en ce que la ou les poche(s) est(sont) placée(s) dans la cuve selon une disposition décalée par rapport à la verticale passant par l'ouverture de remplissage de la cuve et, à l'état au moins partiellement gonflée(s), en appui sur la paroi interne supérieure de la cuve.

Le gonflage de la ou les poche(s), ou son dégonflage permet d'ajuster le niveau du liquide en fonction des conditions (température, fermentation, évaporation, prélèvements,..), sans introduction de liquide supplémentaire dans la cuve, et donc sans dilution et/ou modification de la composition du liquide, tel que du vin. De plus, le positionnement décalé par rapport à la verticale passant par l'ouverture de remplissage supprime une poussée de la poche gonflée sur le couvercle ou bonde d'obturation. La poussée d'Archimède de chaque poche s'exerce alors sur ladite paroi interne supérieure de la cuve, et de préférence uniquement sur celle-ci.

Selon un premier mode de réalisation de l'invention, la ou les poche(s) est(sont) placée(s) dans la cuve selon une disposition verticale.

Le positionnement vertical, voire strictement vertical, de la ou des poche(s) est essentiel pour les poches de grands volumes équipant des cuves de grande capacité (par exemple de 10 ou 20 hectolitres à plusieurs centaines d'hectolitres).

De manière avantageuse, la poche est retenue en position verticale par des moyens d'ancrage aux parois latérales et/ou aux parois supérieure et inférieure internes de la cuve. Un tel ancrage permet notamment à ladite poche de ne pas dévier de sa verticalité pendant son gonflage, et à l'état gonflé, de toujours exercer une poussée sur la même portion de la paroi interne de la cuve, ceci quel que soit le taux de gonflage et donc le volume de la poche.

Les moyens de fixation pour réaliser un tel ancrage peuvent être des moyens de fixation temporaires ou permanents.

Avantageusement, ladite poche présente une hauteur correspondant au moins à la moitié de la hauteur de l'espace interne de la cuve, de préférence au moins les deux tiers de la hauteur de l'espace interne de la cuve, de préférence encore sensiblement égale à la hauteur de l'espace interne de la cuve. De telles dimensions de la poche permettent à cette dernière d'occuper la quasi-totalité de la hauteur de la cuve, et donc d'occuper à l'état gonflé un volume important.

Selon un second mode de réalisation de l'invention la ou les poche(s) présente(nt) la forme d'un anneau, ouvert ou fermé, apte à se déployer verticalement lors de son gonflage, au sein de la cuve. Ladite poche exerce alors, à l'état au moins partiellement gonflé, une poussée sur la paroi supérieure interne de la cuve.

Ces poches, disposées de part et d'autre de l'ouverture de la cuve et/ou sur les côtés de la cuve, ne gênent pas les opérations s'effectuant à partir de l'ouverture supérieure de la cuve, telles que : remplissage de la cuve, éventuellement manoeuvres ponctuelles de pompage (par exemple pour les opérations de levurage, chaptalisation, homogénéisation, apport de nutriments, etc...)

La ou les poche(s) du dispositif selon l'invention est (sont) couplée(s) à des moyens de gonflage et de dégonflage : par exemple sous la forme d'un bras de levier actionnant la fermeture ou l'ouverture d'une vanne, ou sous la forme d'une pompe permettant de remplir ou vider ladite poche, pilotés par le flotteur.

Ladite poche est gonflable par un gaz, tel que de l'air, de azote, du gaz carbonique ou un mélange de ceux-ci, et/ou par un liquide, tel que de l'eau.

Une telle poche en forme d'anneau fermé (aussi dénommée en forme de couronne) ne nécessite pas d'ancrage sur les parois de la cuve, et ne vient jamais obturer l'ouverture centrale de ladite cuve. Lors de son gonflage, appuyant sur la paroi supérieure de la cuve, ladite poche se déploie verticalement en direction du fond de la cuve.

Le volume occupé, à l'état gonflé de la poche ou de la totalité des poches d'une cuve peut correspondre à environ 1 à 50 %, de préférence 2 à 40 %, de préférence 5 à 30 % du volume interne de la cuve.

Chaque poche est de préférence en un matériau agréé pour un contact alimentaire, en particulier neutre vis-à-vis du vin, et avantageusement étanche aux gaz et aux liquides. Ce matériau peut être choisi parmi par exemple le polyuréthane, le PVC, le polyéthylène ou le caoutchouc. De préférence encore, ce matériau est un matériau extensible..

Les poches peuvent être :
- soit sous la forme d'un élément tubulaire unique, divisé en compartiments internes reliés entre eux, ou divisé en compartiments indépendants (par exemple superposés), chaque compartiment étant couplé aux dits moyens de gonflage et de dégonflage ;
- soit sous la forme d'éléments tubulaires adjacents reliés entre eux et comportant une connexion commune aux moyens de gonflage et de dégonflage.

Une telle structure permet à la poche de supporter des pressions importantes, notamment les pressions plus importantes exercées par la colonne de liquide dans la partie inférieure de ladite poche. Il est également possible de gonfler de manière indépendante et différente l'un ou l'autre de ces compartiments, selon les besoins.

La cuve équipée d'un dispositif d'aide à la vinification et/ou au stockage du vin tel que décrit précédemment, peut être en particulier, mais de manière non limitative, une cuve de grande capacité, c'est-à-dire de contenance de plusieurs dizaines ou centaines d'hectolitres.

Par cuve on entend dans l'ensemble de ce texte, tout contenant de liquide, notamment les contenants pour vins, jus de fruits, tels que ceux devant subir une macération et/ou une fermentation : par exemple les contenants dénommés barrique, tonneau, foudre, cuve en bois, en béton ou en inox.

La présente invention concerne également un procédé de vinification de vin rouge comprenant une étape de macération dans un dispositif tel que décrit ci-dessus et dans laquelle le jus extrait des grains de raisin (moût) est mis en contact dans la cuve avec la pulpe et la peau du raisin (marc) formant un chapeau compact flottant sur le jus, comprenant au moins une poche gonflable, qui permet d'une part après gonflage l'immersion totale du marc dans le jus en réduisant l'espace de tête, et d'autre part après une suite d'opérations de gonflage/dégonflage de ladite poche de provoquer la fissuration du chapeau de marc et l'homogénéisation du mélange en cours de macération dans la cuve.

Ceci favorise le contact entre le moût et le marc et une meilleure extraction, notamment des anthocyanes, des polyphénols et des tannins. Une telle opération correspond en quelque sorte à un pigeage inversé : ce n'est plus le chapeau de marc que l'on fait descendre dans le jus, mais le jus qui est amené à traverser le chapeau fissuré et à passer au-dessus de celui-ci.

De plus, le gonflage de la ou les poches dès le début de la macération permet à l'ensemble marc + moût d'occuper la totalité du volume intérieur de la cuve, c'est-à-dire jusqu'à la paroi supérieure de la cuve, limitant ainsi l'oxydation de l'ensemble avant le départ de la fermentation alcoolique, jusqu'à la fin de cette fermentation.

Un autre avantage important d'un tel procédé est de réduire, voire supprimer, le taux de sulfites ajoutés pour lutter contre l'oxydation, par exemple ce taux, habituellement de 5 g de soufre par hectolitre peut être réduit à une valeur inférieure ou égale à 2g de soufre par hectolitre de vin.

Les opérations en tant que dispositif de régulation de la température dans la cuve peuvent être réalisées en continu ou selon des cycles de fréquence prédéterminée, en fonction du cépage et du type de vin souhaité.

La présente invention porte également sur plusieurs utilisations avantageuses du dispositif tel que décrit précédemment, par exemple :
- une utilisation en tant que dispositif de régulation de la température dans la cuve.
En effet, si le gaz ou le liquide introduit dans la ou les poches gonflable(s) présente une température différente de celle du jus de la cuve, il va permettre notamment une régulation thermique favorisant ou ralentissant la macération et/ou la fermentation au sein de la cuve.
- une utilisation en tant que dispositif de stockage du gaz carbonique produit lors de la vinification, plus spécifiquement la fermentation.
A cet effet il est possible d'aspirer l'atmosphère saturée en gaz carbonique en haut d'une cuve en cours de fermentation, de l'introduire dans au moins une des poches et de restituer ce gaz carbonique plus tard pour protéger une cuve de l'oxydation par l'air.

L'invention sera bien comprise à la lecture de la description suivante d'exemples de réalisation, en référence aux dessins annexés dans lesquels :
La figure 1 présente un schéma général en coupe d'un dispositif selon un premier mode de réalisation de l'invention installé dans une cuve ;
Les figures 2 et 3 sont des schémas en coupe montrant un exemple de moyen de gonflage/dégonflage des poches du dispositif selon le premier mode de réalisation de l'invention en position respectivement de gonflage et de dégonflage ;
Les figures 4 à 6 suivantes sont des schémas en coupe d'un dispositif selon le premier mode de réalisation de l'invention dans une cuve lors d'une étape de macération : la figure 4 illustre le début de macération, la figure 5 le gonflage des poches pour repousser le chapeau de marc et la figure 6 montre les poches dégonflées avec le chapeau de marc fissuré;
Les figures 7 et 8A et 8B sont des vues en coupe de poches annulaires selon le second mode de réalisation de l'invention : la figure 7 est une poche annulaire de forme torique, les figures 8A et 8B de forme annulaire non torique, la figure 8A schématisant la poche à l'état dégonflé et la figure 8B à l'état au moins partiellement gonflé ;
Les figures 9, 10 et 11 présentent des vues de dessus de différentes variantes du second mode de réalisation de l'invention : la figure 9 est une poche en forme d'anneau fermé, la figure 10 est une poche de forme semi-annulaire, et la figure 11 est une poche en forme d'un anneau ouvert.

En se référant aux figures, la cuve 1 renfermant un liquide en cours de stockage, tel que du vin 2, comporte une ouverture 18 supérieure (fermée dans l'exemple présenté, par un couvercle ou bonde 3). Le niveau du liquide 4 est repéré par un flotteur 8.

A l'intérieur de cette cuve 1, ont été introduites, dans l'exemple présenté correspondant au premier mode de réalisation de l'invention, deux poches 10 et 20 disposées de manière décalée par rapport à la verticale de la bonde 3. Ces deux poches occupent sensiblement toute la hauteur de la cuve entre le fond 7 et la paroi supérieure 5.

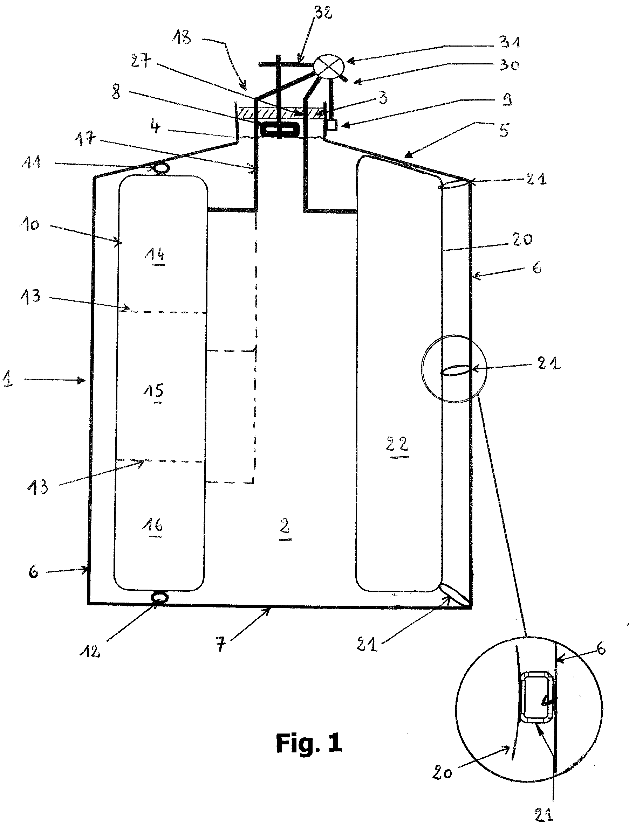

La figure 1 présente deux modes différents d'ancrage de ces poches. La poche de gauche 10 est ancrée au moyen d'un élément de fixation supérieur 11 à la paroi interne supérieure 5 de la cuve et au moyen d'un élément de fixation inférieur 12 à la paroi de fond 7 de la cuve. La poche de droite 20, est quant à elle, comme schématisée sur la figure 1, ancrée à la paroi interne latérale 6 de la cuve au moyen des éléments de fixation 21. Ces deux modes de fixation (qui peuvent en variante être combinés) permettent de maintenir verticales les deux poches à l'intérieur de la cuve 1.

Les éléments de fixation sont par exemple du type anneau/crochet (comme schématisé dans l'agrandissement de détail de la figure 1) tel que sous la forme d'anneaux solidarisés à l'enveloppe de la poche et crochets fixés à la paroi interne de la cuve.

Le volume intérieur de ces poches 10, 20 est modifiable selon leur gonflage, leur volume intérieur étant relié dans le cas présent à une source d'air extérieur au moyen des conduits 17 respectivement 17 et 27. Le volume intérieur de ces poches peut comporter un seul compartiment 22 comme l'exemple de la poche de droite de la figure 1, ou plusieurs compartiments comme schématisé en pointillés sur la poche de gauche (trois compartiments 14, 15 et 16) séparés par des cloisons intérieures 13. Chacun de ces compartiments 14, 15, 16 est relié au conduit 17 de remplissage d'air de la poche.

A l'état gonflé, ces poches verticales exercent une poussée d'Archimède sur la paroi interne supérieure 5 de la cuve, soit par l'intermédiaire de la fixation supérieure 11 de la poche de gauche, soit directement par un appui direct du matériau de la poche (voir poche de droite 20).

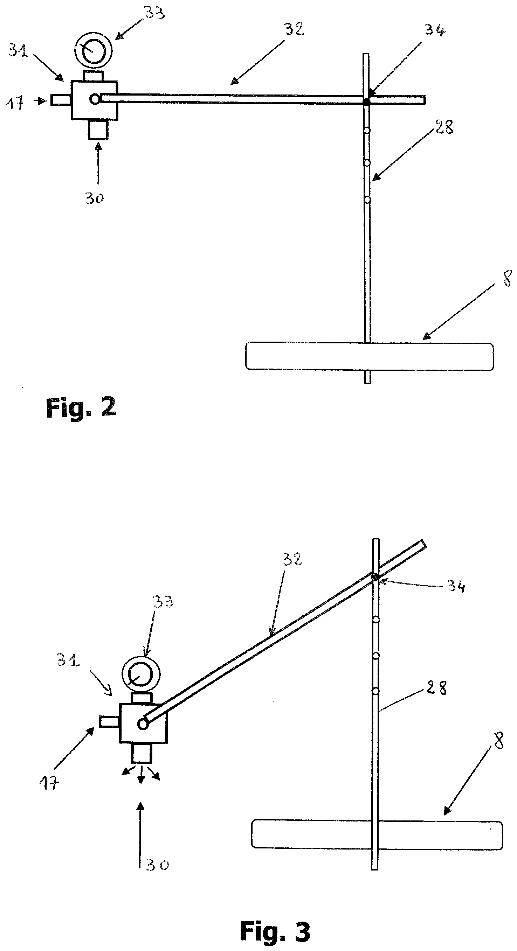

Le gonflage/dégonflage de ces poches est effectué manuellement ou peut être commandé par le flotteur 8 relié à un bras de levier 32 par l'intermédiaire de son support réglable 28. Ce bras de levier 32 est articulé à une de ses extrémités autour d'un axe 34 au support du flotteur réglable 28 et porte à son autre extrémité la vanne 31 avec son manomètre 33, reliés d'une part à la sortie d'air extérieure 30 et d'autre part au conduit de remplissage 17 de la première poche ou de la seconde poche. Lorsque le flotteur 8 est en position basse (figure 2), la vanne est à l'état fermé et lorsque le flotteur est en position haute, la vanne est ouverte et évacue l'air des poches par la sortie 30 (figure 3).

L'ensemble vanne/bras de levier est fixé au moyen d'un support de fixation 9 aux parois de l'ouverture de remplissage de la cuve fermée par la bonde 3.

Le gonflage d'au moins l'une des poches 10, 20 ou des deux poches 10, 20 permet d'élever le niveau du liquide 4 en partie supérieure de la cuve de manière à limiter l'espace de tête dans celle-ci. On évite ainsi l'oxydation du vin 2. Le gonflage peut être réalisé à l'aide d'un compresseur ou de bouteilles de gaz sous pression.

Un dégonflage peut être effectué lorsque le niveau du liquide s'élève (par exemple en cas d'augmentation de son volume en raison d'une augmentation de la température), afin d'éviter que la cuve ne déborde.

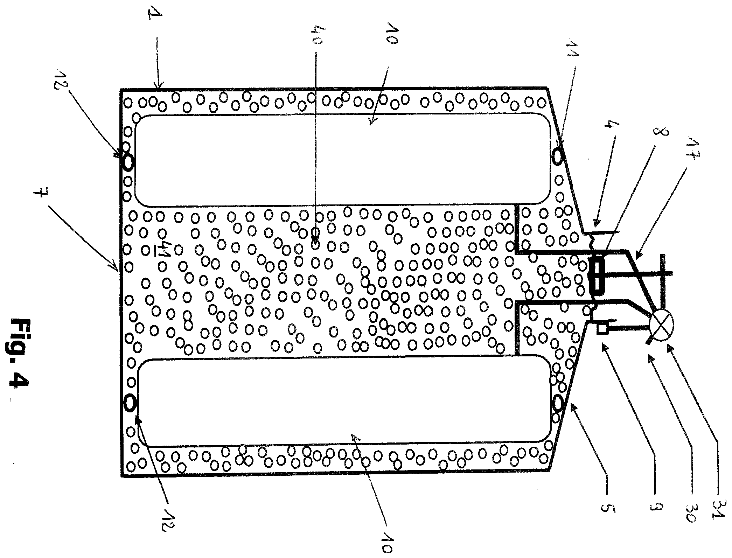

Les figures 4, 5 et 6 montrent un exemple d'utilisation du dispositif selon la présente invention lors de l'étape de macération pour la vinification de vin rouge en particulier.

Dans la cuve 1, ont été placés des grains de raisins 40 en présence de leur jus 41. Pour éviter l'oxydation lors de cette macération des grains avec leur jus, les deux poches ont été gonflées afin que le niveau du jus 4 parvienne au niveau de l'ouverture 18 de remplissage de la cuve 1. On peut alors fermer la cuve ou mettre en place le flotteur 8. Ceci permet d'éviter l'oxydation au début de la macération.
Une élévation du niveau du jus due au début de fermentation soulève le flotteur qui commande un dégonflage léger des poches.

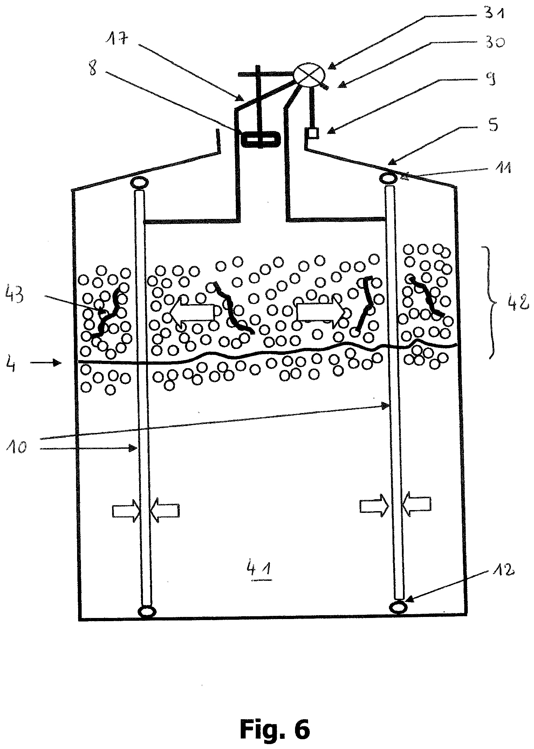

Les grains (peau et pulpe) entraînés par le début de fermentation et le dégagement de gaz carbonique se concentrent alors en partie supérieure du jus 41 pour former un chapeau de marc 42 qui devient de plus en plus compact. Pour décompacter ce chapeau, les poches 10 sont alternativement gonflées et dégonflées (voir figure 6), ce qui provoque le "décompactage" du chapeau de marc et sa fissuration (lors des phases de dégonflage, le flotteur est avantageusement déconnecté).

Ces fissures 43 permettent alors, lors d'un nouveau gonflage des poches 10, d'y faire passer le jus 41 qui peut venir recouvrir le chapeau de marc.

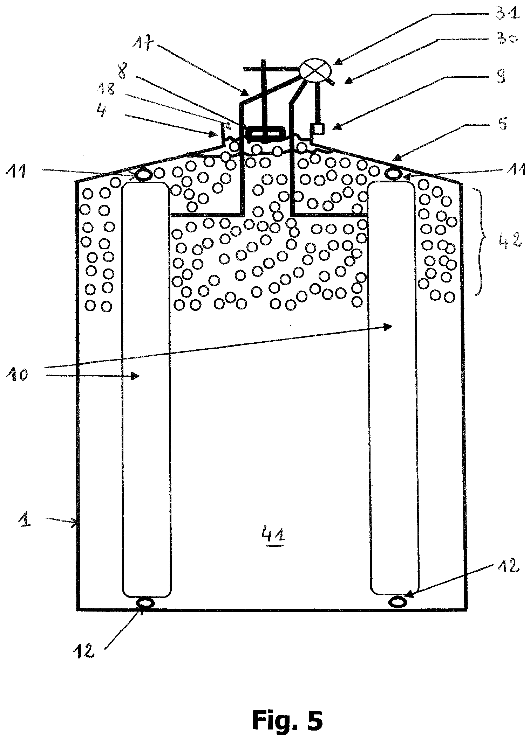

En gonflant/dégonflant alternativement les poches 10, on crée une mise en contact forcé du jus et des peaux du raisin créant un mode d'extraction amélioré. Le dégonflage des poches verticales crée un espace que le chapeau de marc vient occuper en s'étalant et en se fissurant. Le regonflage des poches force le jus, en grande partie renouvelé, à remonter à travers le chapeau de marc jusqu'à son sommet. La totalité du marc participe ainsi à l'extraction (figure 5).

Une alternance des phases de gonflage/dégonflage sans à coup donc sans brassage violent du liquide peut aussi être envisagée pour homogénéiser le liquide au sein de la cuve. Cette fonction est d'autant mieux réalisée que les poches 10, 20 descendent jusqu'au fond 7 de la cuve. De plus, avec cette technique, la température au sein de la cuve en pleine fermentation est plus homogène qu'avec une technique de l'art antérieur, ce qui évite souvent d'avoir recours à des systèmes complexes de régulation de température.

Par ailleurs, dans le cas préférentiel d'un remplissage au gaz (air), toute augmentation du niveau des raisins causée par exemple par le départ en fermentation et/ou l'élévation de la température au sein de la cuve agit sur le flotteur 8 déclenchant un système automatique de dégonflage de la poche, la cuve 1 ne débordant pas et restant pleine en occupant la totalité du volume disponible.

Selon le second mode de réalisation de l'invention, une poche de forme annulaire 30 est positionnée à l'intérieur de la cuve 1 et gonflée comme selon le mode de réalisation précédent pour, notamment, ajuster le niveau du vin en fonction des conditions (température, fermentation, évaporation, prélèvement, ...) sans introduction de liquide supplémentaire dans la cuve.

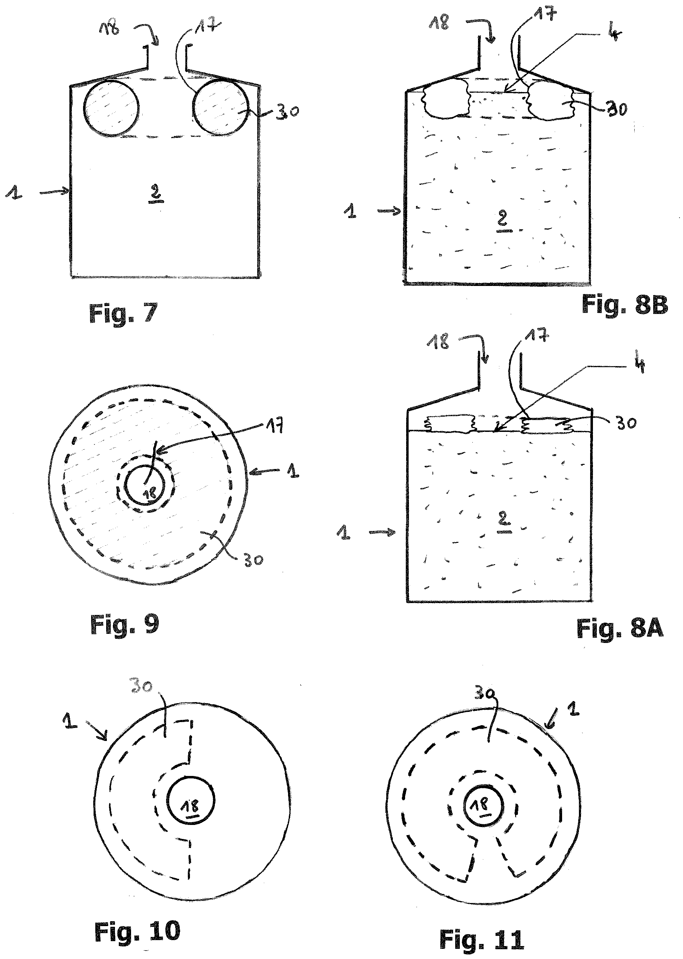

Cette poche de forme torique (figure 7) ou de forme non torique (figures 8A et 8B) présente également un positionnement décalé par rapport à la verticale passant par l'ouverture 18 de remplissage de la cuve 1.

La poussée d'Archimède de cette poche 30 s'exerce sur la paroi interne supérieure de la cuve sans gêner l'ouverture 18.

Lors de son gonflage (voir la comparaison des schémas des figures 8A et 8B), la poche se déploie verticalement en direction du fond de la cuve tout en faisant monter le niveau (4) du vin dans la cuve (1).

Différentes variantes de cette poche de forme annulaire peuvent être envisagées. La figure 9 représente une poche 30 en forme d'anneau fermé entourant l'ouverture 18 de la cuve. Selon d'autres variantes, la poche peut être de forme annulaire ouverte, par exemple semi-annulaire comme schématisé à la figure 10 ou en forme d'un anneau ouvert sur une partie limitée (figure 11).

## Revendications

1. Dispositif d'aide à la vinification et/ou au stockage du vin dans une cuve par régulation du niveau du liquide dans ladite cuve, comprenant :
a)une cuve (1), contenant un liquide (2), tel que du jus de raisin en cours de macération ou fermentation du vin, et susceptible de renfermer un gaz dans l'espace compris entre le niveau du liquide et la paroi interne supérieure de ladite cuve, dénommé espace de tête,
b)des moyens indicateurs du niveau (4) du liquide dans la cuve, de préférence sous la forme d'un flotteur (8),
c)des moyens d'ajustement du niveau (4) du liquide, sans ajout de liquide supplémentaire, sous la forme d'au moins une poche (10, 20) gonflable immergée dans le liquide à l'intérieur de la cuve,
d)la ou les poches étant couplée(s) à des moyens de gonflage et de dégonflage pilotés par le flotteur (8),
**caractérisé en ce que** la ou les poche(s) est(sont) placée(s) dans la cuve (1) selon une disposition décalée par rapport à la verticale passant par l'ouverture (18) de remplissage de la cuve (1) et, à l'état au moins partiellement gonflée(s), en appui sur la paroi interne supérieure (5) de la cuve.

2. Dispositif selon la revendication 1, **caractérisé en ce que** la ou les poche(s) est(sont) placée(s) dans la cuve (1) selon une disposition verticale.

3. Dispositif selon la revendication 1 ou 2, **caractérisé en ce que** la poche (10, 20) est retenue en position verticale par des moyens d'ancrage aux parois latérales (6) et/ou aux parois supérieure (5) et inférieure internes de la cuve.

4. Dispositif selon l'une quelconque des revendications 1 à 3, **caractérisé en ce que** ladite poche (10, 20) présente une hauteur correspondant au moins à la moitié de la hauteur de l'espace interne de la cuve (1), de préférence au moins les deux tiers de la hauteur de l'espace interne de la cuve, de préférence encore sensiblement égale à la hauteur de l'espace interne de la cuve.

5. Dispositif selon la revendication 1, **caractérisé en ce que** la ou les poche(s) présente(nt) la forme d'un anneau, ouvert ou fermé, apte à se déployer verticalement lors de son gonflage au sein de la cuve.

6. Dispositif selon l'une quelconque des revendications précédentes, **caractérisé en ce que** ladite poche (10, 20) est gonflable par un gaz, tel que de l'air, de azote, du gaz carbonique ou un mélange de ceux-ci, et/ou par un liquide, tel que de l'eau.

7. Dispositif selon l'une quelconque des revendications précédentes, **caractérisé en ce que** le volume occupé, à l'état gonflé de la poche ou de la totalité des poches d'une cuve correspond à environ 1 à 50 %, de préférence 2 à 40%, de préférence 5 à 30 % du volume interne de la cuve.

8. Dispositif selon l'une quelconque des revendications précédentes, **caractérisé en ce que** la ou les poches est(sont) sous la forme d'un élément tubulaire, divisé en compartiments (14, 15, 16) internes indépendants, chaque compartiment étant couplé aux dits moyens de gonflage et de dégonflage.

9. Procédé de vinification de vin rouge comprenant une étape de macération dans un dispositif selon l'une quelconque des revendications 1 à 8, et dans laquelle le jus extrait des grains de raisin (moût) est mis en contact dans la cuve (1) avec la pulpe et la peau du raisin (marc) formant un chapeau compact flottant sur le jus, comprenant au moins une poche (10, 20) gonflable, qui permet d'une part après gonflage l'immersion totale du marc dans le jus (41) en réduisant l'espace de tête et d'autre part après une suite d'opérations de gonflage/dégonflage de ladite poche de provoquer la fissuration du chapeau de marc (42) et l'homogénéisation du mélange en cours de macération dans la cuve (1).

10. Procédé selon la revendication 9, **caractérisé en ce que** les opérations de gonflage/dégonflage de ladite poche sont réalisées en continu ou selon des cycles de fréquence prédéterminée.

11. Utilisation du dispositif selon l'une quelconque des revendications 1 à 8 en tant que dispositif de régulation de la température dans la cuve.

12. Utilisation du dispositif selon l'une quelconque des revendications 1 à 8 en tant que dispositif de stockage du gaz carbonique produit lors de la fermentation.

## Patentansprüche

1. Vorrichtung zur Unterstützung der Weinbereitung und/oder der Lagerung des Weins in einem Tank durch Regulierung des Flüssigkeitsniveaus im Tank, umfassend:
a) einen Tank (1), der eine Flüssigkeit (2) wie Traubensaft während der Maischegärung oder Gärung des Weins enthält und imstande, ein Gas in dem Raum zwischen dem Flüssigkeitsniveau und der oberen Innenwand des Tanks, als Kopfraum bezeichnet, zu enthalten,
b) Anzeigemittel des Flüssigkeitsniveaus (4) im Tank, vorzugsweise in Form eines Schwimmers (8),
c) Korrekturmittel des Flüssigkeitsniveaus (4) ohne Hinzufügen von zusätzlicher Flüssigkeit in Form von mindestens einer aufblasbaren Tasche (10, 20), die in die Flüssigkeit im Innern des Tanks eingetaucht ist,
d) wobei die Tasche(n) mit Aufblas- und Ablassmitteln verbunden ist/sind, die von dem Schwimmer (8) gesteuert werden,
**dadurch gekennzeichnet, dass** die Tasche(n) im Tank (1) in Bezug zur Vertikalen, die durch die Füllöffnung (18) des Tanks (1) verläuft, versetzt und in einem mindestens teilweise aufgeblasenen Zustand in Abstützung an der oberen Innenwand (5) des Tanks platziert ist/sind.

2. Vorrichtung nach Anspruch 1, **dadurch gekennzeichnet, dass** die Tasche(n) im Tank (1) vertikal platziert ist/sind.

3. Vorrichtung nach Anspruch 1 oder 2, **dadurch gekennzeichnet, dass** die Tasche (10, 20) in vertikaler Position von Verankerungsmitteln an den Seitenwänden (6) und/oder an der oberen (5) und unteren Wand des Tanks gehalten wird.

4. Vorrichtung nach einem der Ansprüche 1 bis 3, **dadurch gekennzeichnet, dass** die Tasche (10, 20) eine Höhe aufweist, die mindestens der Hälfte der Höhe des Innenraums des Tanks (1), vorzugsweise mindestens zwei Dritteln der Höhe des Innenraums des Tanks, vorzugsweise noch etwa gleich der Höhe des Innenraums des Tanks, entspricht.

5. Vorrichtung nach Anspruch 1, **dadurch gekennzeichnet, dass** die Tasche(n) die Form eines offenen oder geschlossenen Rings aufweist/aufweisen, der imstande ist, sich bei seinem Aufblasen innerhalb des Tanks vertikal zu entfalten.

6. Vorrichtung nach einem der vorangehenden Ansprüche, **dadurch gekennzeichnet, dass** die Tasche (10, 20) mit einem Gas wie Stickstoff, Kohlendioxid oder einem Gemisch derselben und/oder von einer Flüssigkeit wie Wasser aufblasbar ist.

7. Vorrichtung nach einem der vorangehenden Ansprüche, **dadurch gekennzeichnet, dass** das im aufgeblasenen Zustand der Tasche oder aller Taschen eines Tanks belegte Volumen zirka 1 bis 50 %, vorzugsweise 2 bis 40 %, vorzugsweise 5 bis 30 % des Innenvolumens des Tanks entspricht.

8. Vorrichtung nach einem der vorangehenden Ansprüche, **dadurch gekennzeichnet, dass** die Tasche(n) in Form eines rohrförmigen Elements ist/sind, unterteilt in unabhängige innere Kammern (14, 15, 16), wobei jede Kammer mit den Aufblas- und Ablassmitteln verbunden ist.

9. Vorrichtung zur Weinbereitung von Rotwein, umfassend einen Schritt der Maischegärung in einer Vorrichtung nach einem der Ansprüche 1 bis 8, und wobei der aus den Traubenbeeren extrahierte Saft (Most) in einem Tank (1) mit dem Mark und der Haut der Trauben (Trester) in Kontakt versetzt wird, bildend einen kompakte Bedeckung, die auf dem Saft schwimmt, umfassend mindestens eine aufblasbare Tasche (10, 20), die zum einen nach dem Aufblasen das vollständige Eintauchen des Tresters in den Saft (41) bei Reduzierung des Kopfraums und zum anderen nach einer Abfolge von Aufblas- und Ablassvorgängen der Tasche erlaubt, das Aufreißen der Tresterbedeckung (42) und die Vereinheitlichung des Gemischs während der Maischegärung im Tank (1) zu bewirken.

10. Verfahren nach Anspruch 9, **dadurch gekennzeichnet, dass** die Aufblas-/Ablassvorgänge der Tasche kontinuierlich oder in Zyklen mit vorbestimmtem Intervall durchgeführt werden.

11. Verwendung der Vorrichtung nach einem der Ansprüche 1 bis 8 als Reguliervorrichtung der Temperatur im Tank.

12. Verwendung der Vorrichtung nach einem der Ansprüche 1 bis 8 als Lagervorrichtung des während des Gärens entstandenen Kohlendioxids.

## Claims

1. A device to assist with the winemaking process and/or the storage of wine in a vessel by regulating the level of the liquid in said vessel, comprising:
a) a vessel (1), containing a liquid (2), such as grape juice undergoing maceration or fermentation of the wine, and able to contain a gas in the space comprised between the level of the liquid and the upper inner wall of said vessel, called headspace,
b) indicator means of the level (4) of the liquid in the vessel, preferably in the form of a float (8),
c) means for adjusting the level (4) of the liquid, without adding additional liquid, in the form of at least one inflatable pouch (10, 20) submerged in the liquid inside the vessel,
d) the pouch or pouches being coupled to inflating and deflating means controlled by the float (8),
**characterized in that** the pouch or pouches is (are) placed in the vessel (1) using an arrangement offset relative to the vertical passing through the opening (18) for filling the vessel (1) and, in the at least partially inflated state, bearing on the upper inner wall (5) of the vessel.

2. The device according to claim 1, **characterized in that** the pouch or pouches is (are) placed in the vessel (1) with a vertical arrangement.

3. The device according to claim 1 or 2, **characterized in that** the pouch (10, 20) is kept in the vertical position by anchoring means to the side walls (6) and/or the inner upper (5) and lower walls of the vessel.

4. The device according to any one of claims 1 to 3, **characterized in that** said pouch (10, 20) has a height corresponding to at least half of the height of the inner space of the vessel (1), preferably at least two thirds of the height of the inner space of the vessel, still more preferably substantially equal to the height of the inner space of the vessel.

5. The device according to claim 1, **characterized in that** the pouch or pouches is (are) in the form of an open or closed ring, able to be deployed during its inflation within the vessel.

6. The device according to any one of the preceding claims, **characterized in that** said pouch (10, 20) is inflatable by a gas, such as air, nitrogen, carbon dioxide or a mixture thereof, and/or by a liquid, such as water.

7. The device according to any one of the preceding claims, **characterized in that** the volume occupied, in the inflated state of the pouch or all of the pouches of the vessel, corresponds to about 1 to 50%, preferably 2 to 40%, preferably 5 to 30% of the inner volume of the vessel.

8. The device according to any one of the preceding claims, **characterized in that** the pouch or pouches is (are) in the form of a tubular element, divided into independent inner compartments (14, 15, 16), each compartment being coupled to said inflating and deflating means.

9. A method for making red wine comprising a maceration step in a device according to any one of claims 1 to 8, and wherein the juice extracted from the grape seeds (must) is placed in contact in the vessel (1) with the pulp and skin of the grape (marc) forming a compact cap floating on the juice, comprising at least one inflatable pouch (10, 20), which allows, on the one hand, after inflation, the total submersion of the marc in the juice (41) by reducing the headspace, and on the other hand, after a series of inflation/deflation operations of said pouch, causes cracking of the marc cap (42) and homogenization of the mixture being macerated in the vessel (1).

10. The method according to claim 9, **characterized in that** the inflation/deflation operations of said pouch are done continuously or according to cycles with a predetermined frequency.

11. A use of the device according to any one of claims 1 to 8 as a device for regulating the temperature in the vessel.

12. A use of the device according to any one of claims 1 to 8 as a device for storing carbon dioxide produced during the fermentation.
